# EUROPÄISCHE PATENTSCHRIFT

(11) **EP 2 562 464 B1**
(45) Veröffentlichungstag und Bekanntmachung des Hinweises auf die Patenterteilung: **23.04.2014**
(21) Anmeldenummer: 11179022.6
(22) Anmeldetag: 26.08.2011
(51) Int. Cl.: F16P 3/08, F16P 3/12, E05F 15/00, F16D 63/00

(54) **Arretierungs-Vorrichtung**
Locking device
Dispositif d'arrêt

(43) Veröffentlichungstag der Anmeldung: 27.02.2013
(73) Patentinhaber: Strasser Maschinenbau GmbH, D-88276 Berg/Ravensburg (DE)
(72) Erfinder: Strasser, Karl-Heinz, 88276 Berg/Ravensburg (DE)
(74) Vertreter: Engelhardt & Engelhardt

(56) Entgegenhaltungen:
- DE-A1- 10 201 418
- DE-U1- 20 221 643
- GB-A- 1 021 552
- US-A- 3 215 402

## Beschreibung

Die Erfindung bezieht sich auf eine Arretierungs-Vorrichtung nach dem Oberbegriff des Patentanspruches 1.

Eine solche Vorrichtung zur Arretierung eines linear verschiebbaren Bauteils, insbesondere einer Schutztür oder einer Schutzeinrichtung, ist beispielsweise aus der DE10201418A1, DE 20221643 U1 oder GB 1021552 zu entnehmen. Die Schutztür ist dabei in zwei zueinander beabstandeten Profilschienen in horizontaler, vertikaler Richtung oder in einer beliebigen Neigung verschiebbar gelagert. Um Verletzungen bei einer unsachgemäßen Bedienung von Werkzeugmaschinen, Förderbänder oder anderen maschinellen Anlagen zu verhindern, ist die Schutztür permanent an einer Arbeitsstelle hin und her zu bewegen, um die Arbeitsstelle zugänglich zu machen. Dieser Zugang ist beispielsweise zur Bestückung der Arbeitsstelle erforderlich. Während des Arbeitsganges der Werkzeugmaschine soll die Arbeitsstelle nach außen zuverlässig verschlossen sein.

Es hat sich nunmehr gezeigt, dass die Hubbewegungen der Schiebetür in einer möglichsf schhellen Taktfrequenz zu erfolgen haben, um die Be- und Endladezeiten an der Arbeitsstelle zu reduzieren. Die bekannten Servoeinrichtungen können zwar mit einem entsprechenden Hub und den damit in Verbindung stehenden Beschleunigungskräften ausgestattet sein, so dass die Öffnungs- und Schließvorgänge des Bauteils bzw. der Schutztüre rasch zu bewerkstelligen sind, jedoch hat sich herausgestellt, dass sich bei einer unsachgemäßen Bedienung, wenn beispielsweise eine Hand oder ein anderes Körperteil des Bedienpersonals zwischen die Unterkante der Schutztür und einer Schließkante der Arbeitsstelle gelangt, erhebliche Kräfte auftreten, um die Schutztüre in einem möglichst klein bemessenen Hubweg vollständig zu stoppen.

Für solche Arretierungsvorgänge hat sich die Vorrichtung zur Arretierung eines Bauteils nach der DE10201418 A1 in der Praxis bewährt. Da jedoch aufgrund der während des Arretierungsvorgangs entstehenden Bremskräfte eine erhebliche Belastung auf die Profilschienen und die Schutztür bzw. das Bauteil einwirkt und diese Kräfte zu Beschädigungen führen können, ist die Drehzahl der Servoeinrichtung begrenzt. Wenn nämlich aus einer schnellen Bewegung innerhalb von einigen wenigen Millimetern Wegstrecke eine Aufstoppung der Schutztür bzw. des Bauteils eintritt, entstehen erhebliche Kräfte, die zu Beschädigungen an der die Arretiervorrichtung bildenden Bauteile führen können. Ist jedoch dieses Bauteil auszutauschen, dann entstehen Stillstandszeiten der Maschine oder Anlage. Dies ist für den Betreiber solcher Maschinen und Anlagen kostenintensiv und sollte folglich vermieden werden.

Es ist daher Aufgabe der Erfindung eine Arretierungs-Vorrichtung der eingangs genannten Gattung derart weiterzubilden, dass zum einen eine zuverlässige Aufstoppung des Bauteils unter hohen Bewegungs- und Beschleunigungskräften möglich ist und zum anderen sollen die derart auftretenden Halte- bzw. Stoppkräfte die Bauteile der Arretierungs-Vorrichtung nicht beschädigen.

Diese Aufgaben sind erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass die Führungssäule mittels einer Schraubendruckfeder linear verschiebbar an einer der Profilschienen gehalten ist, können die auf die Führungssäule auftretenden Bremskräfte gepuffert oder gedämpft werden, denn die Führungssäule ist nicht starr mit der Profilschiene verbunden, sondern wird entgegen der Vorspannkraft der Schraubendruckfeder durch die Bremskräfte, die durch das Sperrglied an die Führungssäule übertragen sind, bewegt. Somit können die Bremskräfte nach Art eines Federzylinders gedämpft werden und gelangen nicht unmittelbar an die Profilschiene bzw, das Bauteil. Aus diesem Grund ist es möglich, die Servoeinrichtung mit einer hohen Drehzahl fahren zu können, um die Öffnungs- und Schließbewegungen des Bauteils in einer akzeptablen Zeitspanne zu bewerkstelligen.

Es ist besonders vorteilhaft, wenn der Dämpfungsweg der Führungssäule mit Hilfe eines Anschlags begrenzt ist. Zunächst ist ein Luftspalt vorzusehen, der zwischen dem freien Ende der Führungssäule, also gegenüberliegend zu der Schraubendruckfeder und dem Anschlag verläuft, um die Bewegung der Führungssäule zu ermöglichen. Wenn zwischen der Führungssäule entweder an dieser oder an dem Anschlag fluchtend zu der Führungssäule ein Dämpfungskörper, beispielsweise in Form eines Gummi-, Kunststoff- oder Gummikunststoffkörper, angebracht ist, können die Aufprallkräfte gegebenenfalls weiter abgedämpft werden. Unabhängig davon, wie hoch die Bremskräfte sind, die auf die Führungssäule einwirken, ist der Verstellweg der Führungssäule folglich begrenzt und es ist exakt vorbestimmbar, welchen Weg das Bauteil im Falle der Auslösung noch zusätzlich zurücklegt. Aus Sicherheitsgründen kann daher der Verstellweg der Führungssäule auf ein erforderliches Maß begrenzt sein.

Durch die Federung der Führungssäule können somit Material- und Herstellungskosten für die Arretierungsvorrichtung eingespart sein, denn eine bauliche Überdimensionierung ist nicht erforderlich, da die auftretenden Bremskräfte nicht mehr in voller Wucht auf das Bauteil, die Profilschienen und das Sperrglied einwirken.

Sobald die Bremskräfte auf die Führungssäule nicht mehr einwirken, wird diese durch die Schraubendruckfeder in ihre Ausgangslage zurückgezogen, so dass dadurch auch das Bauteil um den Betrag des Verstellweges angehoben oder zurückbewegt ist.

In der Zeichnung ist ein erfindungsgemäßes Ausführungsbeispiel dargestellt, das nachfolgend näher erläutert ist. Im Einzelnen zeigt:
- Figur 1:: eine Vorrichtung zur Arretierung eines Bauteils, das mittels einer Servoeinrichtung linear hin und her bewegbar ist, in perspektivischer Ansicht,
- Figur 2:: die Vorrichtung gemäß Figur 1, die ein eine Führungssäule umschließendes Sperrglied aufweist, wobei die Führungssäule mittels einer Schraubendruckfeder linear verschiebbar gehalten ist, in einer vergrößerten Ansicht, und in dem Zustand der unmittelbaren Arretierung des Bauteils, in Seitenansicht und
- Figur 3: die Vorrichtung gemäß Figur 2, nachdem der Arretierungsvorgang des Bauteils beendet ist.

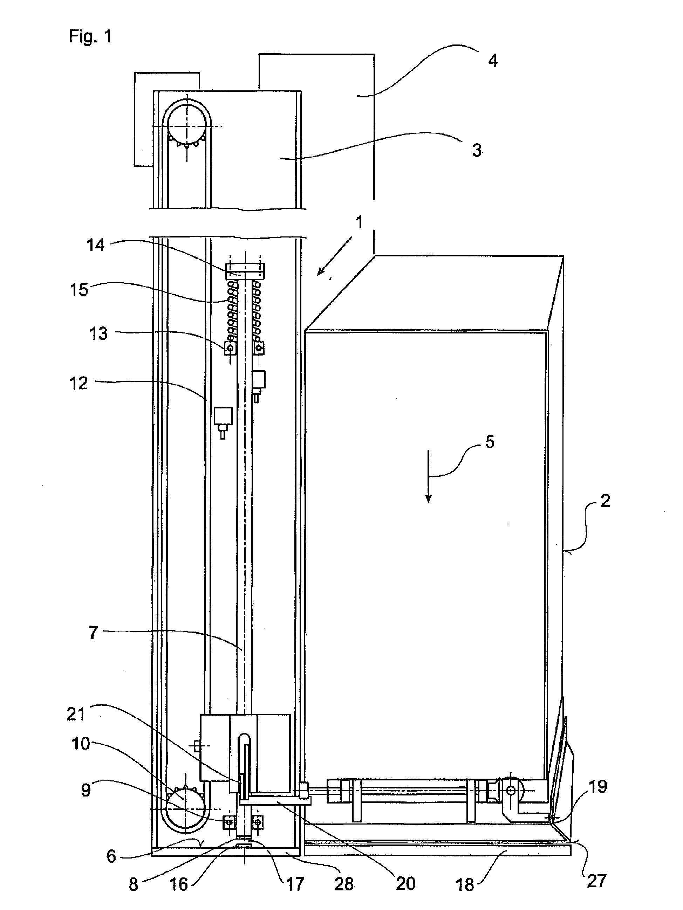

In den Figuren 1, 2 und 3 ist eine Vorrichtung 1 zur Arretierung eines verschiebbaren Bauteils 2, insbesondere einer vor einer zu sichernden Arbeitsstelle einer Werkzeugmaschine angeordneten Schiebetür zu entnehmen. Das Bauteil 2 bewegt sich in der mit der Bezugsziffer 5 gekennzeichneten vertikalen Verstellrichtung 5, um die Arbeitsstelle an der Werkzeugmaschine, an einem Förderband oder einer sonstigen maschinellen Anlage während des Bearbeitungsprozesses nach außen zu verschließen, so dass diese nicht zugänglich und insoweit geschützt ist. Das Bauteil 2 ist selbstverständlich auch in der Horizontalen oder in einer geneigten Ebene bewegbar.

Zum Be- und Entladen der Arbeitsstelle ist es erforderlich, das Bauteil 2 entgegen der Verstellrichtung 5 anzuheben. Zu diesem Zweck ist das Bauteil 2 in zwei C- oder U-förmig ausgestalteten Profilschienen 3 und 4 verschiebbar gehalten, die parallel und beabstandet zueinander ausgerichtet sind.

Desweiteren ist eine Servoeinrichtung 11, beispielsweise in Form eines Elektromotors, vorgesehen, durch die ein Keilriemen 12 angetrieben ist. An dem Keilriemen 12 ist an einer vorgegebenen Position die Vorrichtung 1 angebracht, die somit trieblich mit dem Keilriemen 12 und dem Bauteil 2 verbunden ist. Durch die Rotation des Keilriemens 12 wird demnach das Bauteil 2 in den Profilschienen 3 und 4 auf und ab bewegt. Im Bereich eines Bodens 28 der Arbeitsstelle ist dabei ein Umlenkrad 10 vorgesehen, durch das der Keilriemen 12 geführt gehalten ist.

Falls während des Schließvorganges des Bauteils 2, also bei der Bewegung in die Verstellrichtung 5, ein Bedienpersonal unsachgemäß die Arbeitsstelle der Werkzeugmaschine bedient und beispielsweise in diese eingreift, könnte der Arm durch die Bewegung des Bauteils 2 zwischen diesem und einer Schließkante 27 eingeklemmt und verletzt werden. Aus Sicherheitsgründen ist daher das Bauteil 2 unmittelbar dann zu stoppen, wenn dieses während der Verstellbewegung nach unten auf ein Hindernis auftrifft. Zu diesem Zweck ist an der Unterkante des Baulteils 2 ein Griffstück 18 angebracht, das nach außen verschwenkbar an dem Bauteil 2 gelagert ist und an dem eine Winkelschiene 19 angebracht ist, die mit einer Wippe 20 verbunden ist. Die Wippe 20 ist dabei an der Vorrichtung 1 verschwenkbar gelagert und sobald das Griffstück 18 nach außen gedrückt ist, wird die Wippe 20 nach unten geschoben und ein Sperrglied 21 der Vorrichtung 1 wird zur Arretierung des Bauteils 2 aktiviert. Das Sperrglied 21 besteht dabei aus einer winkelig ausgestalteten Halteplatte, in die eine Öffnung 23 eingearbeitet ist.

Parallel und beabstandet zu einer oder zu beiden Seiten der Profilschienen 3 und 4 ist eine Führungssäule 7 vorgesehen, an der das Sperrglied 21 mit Spiel verläuft. Die Öffnung 23 wird demnach nahezu vollständig von der Führungsstange 7 ausgefüllt; allerdings liegt die Innenseite der Öffnung 23 nicht an der Außenseite der Führungssäule 7 während der Hubbewegung des Bauteils 2 an, so dass keinerlei Berührung im normalen Betriebszustand herrscht und daher auch keinerlei Verschleiß an der Führungssäule 7 oder an der Innenseite der Öffnung 23 entsteht.

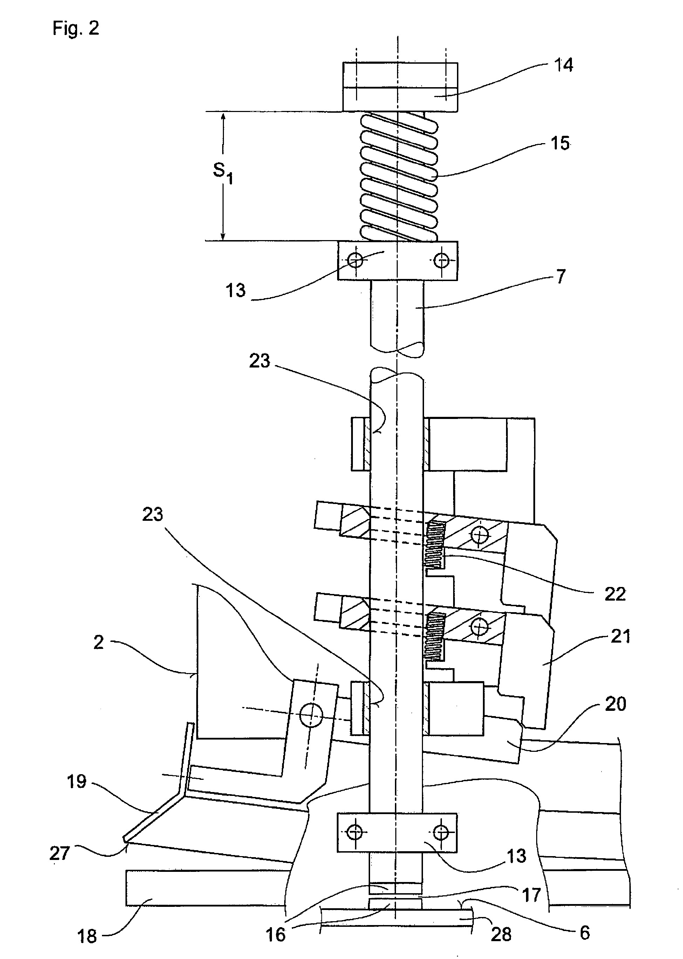

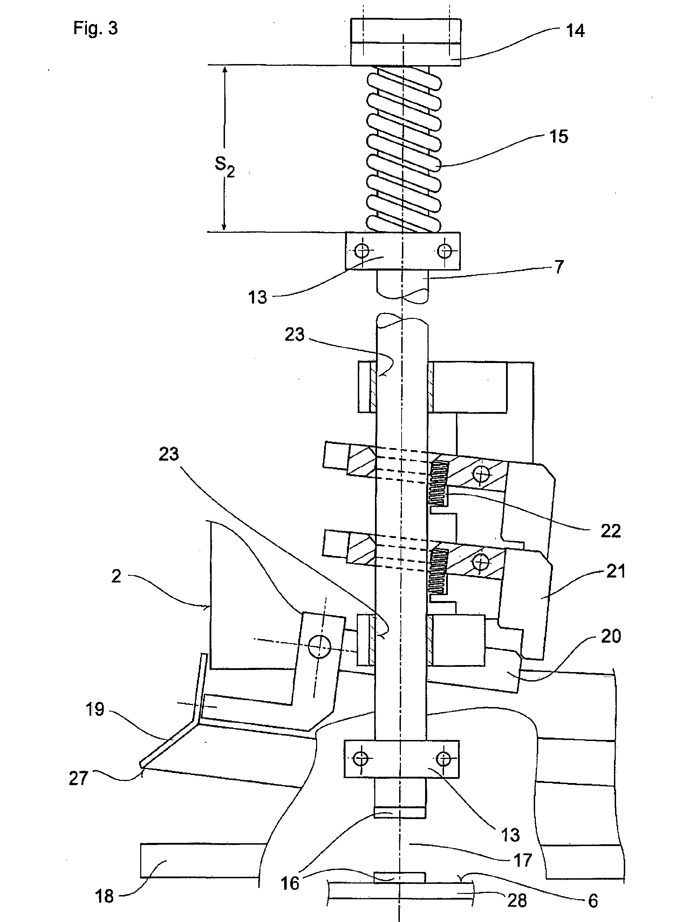

Wird allerdings das Griffstück 18 betätigt und nach außen gedrückt, erfolgt eine Verstellung des Sperrgliedes 21 derart, dass die Öffnung 23 aus der Horizontalen gekippt ist und somit , wie dies insbesondere in den Figuren 2 und 3 zu entnehmen ist, eine kraftschlüssige Wirkverbindung zwischen der Führungssäule 7 und dem Sperrglied 21 entsteht, wodurch eine Bremskraft entsteht, durch die die Verstellbewegung des Bauteils 2 gestoppt ist und durch die auf die Führungssäule 7 eine Bremskraft ausgeübt ist.

Diese entstehenden Kräfte sollen durch eine Schraubendruckfeder 15 gedämpft sein, so dass somit keine Beschädigungen an den Profilschienen 3, 4 oder dem Bauteil 2 entstehen. Die Schraubendruckfeder 15 ist hierfür zwischen einem Halter 13 und einer an der Führungssäule 7 angebrachten Abdeckplatte 14 eingesetzt. Der Halter 13 umgreift die Führungssäule 7 und dient als Abstützung für die Schraubendruckfeder 15. Der Halter 13 kann in unterschiedliche Positionen überführt sein, um den Abstand zwischen diesem und der Abdeckplatte 14 variabel einstellen zu können, wodurch die Vorspannkraft der Schraubendruckfeder 15 veränderbar ist. Entlang der Führungssäule 7 ist der Halter 13 verschiebbar an einer der Profilschienen 3 oder 4 montiert.

Durch diese Abstandsveränderung kann die Vorspannkraft der Schraubendruckfeder 15 reduziert oder erhöht werden, um die entsprechenden Dämpfungskräfte aufzunehmen und abzufedern bzw. um den Dämpfungsweg der Führungssäule 7 einzustellen. Beim Betätigen des Sperrgliedes 21 werden die Stoppkräfte nämlich an die Führungssäule 7 übertragen und diese wird in Verstellrichtung 5 gezogen. Dieser Betriebszustand ist in Figur 2 dargestellt. Der Abstand zwischen dem Halter 13 und der Abdeckplatte 14 ist verkleinert. Dies ist mit S₁ in Figur 2 verdeutlicht.

Sobald das Bauteil 2 gestoppt ist, wird die Führungssäule 7 durch die Schraubendruckfeder 15 in die Ausgangslage zurück überführt und aufgrund der kraftschlüssigen Wirkverbindung zwischen der Führungssäule 7 und dem Sperrglied 21 und damit des Bauteils 2 wird dieses um den entsprechenden Weg S₂ nach oben gezogen. Diese Endstellung ist der Figur 3 zu entnehmen. S₁ ist dennoch kleiner als S₂.

Um die Bewegung der Führungssäule 7 nicht zu behindern, ist zwischen dem freien Ende 8, das der Schraubendruckfeder 15 gegenüberliegend angeordnet ist, und dem Boden 28 ein Anschlag 6 vorgesehen. Der Anschlag 6 ist im gezeigten Ausführungsbeispiel die Oberseite des Bodens 28. Es ist jedoch ohne weiteres denkbar, einen separaten Anschlag 6, beispielsweise in Form eines Bolzens, vorzusehen, der derart die Dämpfungsbewegung der Führungssäule 7 begrenzt, dass genügend Platz zwischen der Unterkante des Griffstückes 18 und der Schließkante 28 verbleibt, um ein Einklemmen von Körperteilen zuverlässig zu verhindern.

Um den Aufprall der Führungssäule 7 gegebenenfalls zu dämpfen, ist an dem Anschlag 6 und/oder an dem freien Ende 8 der Führungssäule 7 ein Dämpfungskörper 16 befestigt, der beispielsweise aus einem elastischen oder semielastischen Werkstoff, insbesondere aus Kunststoff, Gummi oder einem Kunststoffgummigemisch hergestellt ist. Sollte daher das freie Ende 8 der Führungssäule 7 auf den Dämpfungskörper 16 auftreffen, wird die Bewegung der Führungssäule 7 durch diesen begrenzt, so dass der Dämpfungskörper 16 die Funktion eines Anschlages wahrnimmt. Der Dämpfungskörper 16 kann dabei wahlweise an dem Anschlag 6 fluchtend zu der Führungssäule 7 oder an dem freien Ende 8 der Führungssäule 7 oder an beiden Bauteilen angebracht sein. Der Luftspalt zwischen dem freien Ende 8 der Führungssäule 7 und dem Anschlag 6 ist mit der Bezugsziffer 17 gekennzeichnet; dieser Luftspalt 17 ist variabel einstellbar.

Um das Sperrglied 21 von der Führungssäule 7 frei zu geben, ist es erforderlich, das Griffstück 18 wieder in seine vertikale Ausgangsstellung zu drücken, so dass die an dem Sperrglied 21 vorgesehenen Druckfedern 22 vorgespannt sind. Durch die Druckfedern 22 soll nämlich die zuverlässige Wirkverbindung zwischen dem Sperrglied 21 und der Führungssäule 7 hergestellt sein.

## Patentansprüche

1. Vorrichtung (1) zur Arretierung eines verschiebbaren Bauteils (2), insbesondere einer vor einer zu sichernden Arbeitsstelle angeordneten Schutztür oder -einrichtung, das ein- oder beidseitig in Profilschienen (3, 4) geführt und mittels einer Servoeinrichtung (11) verstellbar ist, mit einem an dem Bauteil (2) angeordneten und begrenzt verschwenkbar gelagerten Sperrglied (21), das eine parallel zu den Profilschienen (3, 4) verlaufende Führungssäule (7) vollständig zum selbsttätigen Verspannen an dieser umgreift und eine kraftschlüssige Wirkverbindung zur Arretierung des Bauteils (2) bei der Aktivierung des Sperrgliedes (21) gebildet ist,
**dadurch gekennzeichnet,**
**dass** zwischen der Führungssäule (7) und einer der Profilschienen (3 oder 4) eine Schraubendruckfeder (15) vorgesehen ist, durch die die Führungssäule (7) begrenzt linear verschiebbar an den jeweiligen Profilschienen (3 oder 4) gehalten ist, und dass zwischen dem der Schraubendruckfeder (15) gegenüberliegende freie Ende (8) der Führungssäule (7) und einem Anschlag (6) der Vorrichtung (1) ein Luftspalt (17) vorhanden ist.

2. Vorrichtung nach Anspruch 1,
**dadurch gekennzeichnet,**
**dass** die Schraubendruckfeder (15) zwischen einem die Führungssäule (7) umschließenden Halter (13) und einer an der Führungssäule (7) angebrachten Abdeckplatte (14) angeordnet ist, und dass der Abstand zwischen dem Halter (13) und der Abdeckplatte (14) derart variabel einstellbar ist, dass die Vorspannkraft der Schraubendruckfeder (15) an die aufzunehmenden Kräfte anpassbar ist.

3. Vorrichtung nach Anspruch 2,
**dadurch gekennzeichnet,**
**dass** der Halter (13) unmittelbar oder über Zwischenglieder an einer der Profilschienen (3 oder 4) variabel verstellbar angebracht ist.

4. Vorrichtung nach einem der vorgenannten Ansprüche,
**dadurch gekennzeichnet,**
**dass** fluchtend zu der Führungssäule (7) ein Dämpfungskörper (16) an dem Anschlag (6) oder an dem der Schraubendruckfeder (15) gegenüberliegenden freien Ende (8) der Führungssäule (7) angebracht ist.

5. Vorrichtung nach einem der vorgenannten Ansprüche,
**dadurch gekennzeichnet,**
**dass** die Größe des Luftspaltes (17) zwischen dem freien Ende (8) der Führungssäule (7) und dem Anschlag (6) einstellbar ist.

6. Vorrichtung nach einem der vorgenannten Ansprüche,
**dadurch gekennzeichnet,**
**dass** der Servoeinrichtung (11) eine Rutschkupplung zugeordnet ist, durch die der Kraftfluss zwischen der Servoeinrichtung (11) und einem das Bauteil (2) antreibenden Keilriemen (12) zeitlich begrenzt getrennt ist.

7. Vorrichtung nach Anspruch 4,
**dadurch gekennzeichnet,**
**dass** der an dem freien Ende (8) der Führungssäule (7) und/oder dem Boden (6) angebrachte Dämpfungskörper (16) aus einem elastischen oder semielastischen Werkstoff, vorzugsweise aus Gummi, aus Kunststoff oder aus einem Gummikunststoffgemisch, hergestellt ist.

## Claims

1. A device (1) for locking a movable component (2), in particular a protective door or device arranged in front of a working area that is to be protected, which is guided on one or both sides in profile rails (3, 4) and can be adjusted by means of a servo device (11), with a locking element (21) arranged on the component (2) and mounted with a limited swivelling range that completely encompasses a guide column (7) running parallel to the profile rails (3, 4) for automatic clamping on that column (7), by means of which a force-locking active connection for locking the component (2) when the locking element (21) is activated,
**characterised in that,**
a coiled compression spring (15) is provided between the guide column (7) and one of the profile rails (3 or 4), by means of which the guide column (7) is held on the particular profile rails (3 or 4) with a limited linear movement capability, and that an air gap (17) is provided between the free end (8) of the guide column (7) opposite to the coiled compression spring (15) and a stop (6) of the device (1).

2. The device in accordance with Claim 1,
**characterised in that,**
the coiled compression spring (15) is arranged between a holder (13) encompassing the guide column (7) and a cover plate (14) attached to the guide column (7), and that the distance between the holder (13) and the cover late (14) can be variably adjusted in such a way that the preload force of the coiled compression spring (15) can be adapted to the forces that are to be absorbed.

3. The device in accordance with Claim 2,
**characterised in that,**
the holder (13) is attached directly or via intermediate elements to one of the profile rails (3 or 4) in a variably adjustable manner.

4. The device in accordance with one of the aforementioned claims,
**characterised in that,**
a damping body (16) is attached to the stop (6) or to the free end (8) of the guide column (7) opposite to the coiled compression spring (15), flush with the guide column (7).

5. The device in accordance with one of the aforementioned claims,
**characterised in that,**
the size of the air gap (17) between the free end (8) of the guide column (7) and the stop (6) can be adjusted.

6. The device in accordance with one of the aforementioned claims,
**characterised in that,**
a slip clutch is allocated to the servo device (11), by means of which the powerflow between the servo device (11) and a V-belt (12) driving the component (2) is disconnect for a limited period of time.

7. The device in accordance with Claim 4,
**characterised in that,**
the damping body (16) attached to the free end (8) of the guide column (7) and/or the base (6) is manufactured from an elastic or semi-elastic material, preferably rubber, plastic or a rubber/plastic mixture.

## Revendications

1. Dispositif (1) pour la fixation d'un composant réglable (2), en particulier d'une porte ou d'un équipement de protection à monter devant un poste de travail qui doit être protégé, guidé d'un ou des deux côtés dans des glissières profilées (3, 4) et réglable à l'aide d'un servomoteur (11), muni d'un élément de barrage (21) prévu sur le composant (2) et logé avec pivotement limité, qui, en vue du serrage automatique, enlace entièrement une colonne de guidage (7) s'étendant parallèle aux glissières profilées (3, 4), assurant ainsi un raccord par adhérence pour l'arrêt du composant (2) à l'activation de l'élément de barrage (21),
**caractérisé en ce que**,
entre la colonne de guidage (7) et une des glissières profilées (3 ou 4), il est prévu un ressort de pression à vis (15) qui permet de retenir la colonne de guidage (7) de manière réglable en direction linéaire et dans certaines limites sur les glissières profilées respectives (3 ou 4), et que, entre l'extrémité libre (8) de la colonne de guidage (7) opposée au ressort de pression à vis (15) et une butée (6) du dispositif (1), il existe un interstice (17).

2. Dispositif d'après la revendication 1,
**caractérisé en ce que**
le ressort de pression à vis (15) est prévu entre un support (13) entourant la colonne de guidage (7) et une plaque de recouvrement (14) montée sur la colonne de guidage (7), et que l'écartement entre le support (13) et la plaque de recouvrement (14) se laisse régler de sorte que la force de tarage du ressort de pression à vis (15) soit adaptée aux forces à compenser.

3. Dispositif d'après la revendication 2,
**caractérisé en ce que**
soit directement soit moyennant des éléments intermédiaires, le support (13) se laisse monter de manière réglable sur une des glissières profilées (3 ou 4).

4. Dispositif d'après une des revendications précédentes,
**caractérisé en ce que**
soit sur la butée (6) soit l'extrémité libre (8) de la colonne de guidage (7) opposée au ressort de pression à vis (15), il est prévu un corps d'amortissement (16) aligné sur la colonne de guidage (7).

5. Dispositif d'après une des revendications précédentes,
**caractérisé en ce que**
la taille de l'interstice (17) entre l'extrémité libre (8) de la colonne de guidage (7) et la butée (6) est réglable.

6. Dispositif d'après une des revendications précédentes,
**caractérisé en ce que**,
au servomoteur (11), il est assigné un accouplement à friction assurant la séparation limitée dans le temps du flux de force entre le servomoteur (11) et une courroie trapézoïdale (12) entraînant le composant (2).

7. Dispositif d'après la revendication 4,
**caractérisé en ce que**
le corps d'amortissement (16) monté sur l'extrémité libre (8) de la colonne de guidage (7) et/ou sur le fond (6) est réalisé en matériau élastique ou semiélastique, de préférence en caoutchouc, en matériel synthétique ou en un mélange de caoutchouc et de matériel synthétique.
